# EUROPEAN PATENT APPLICATION

(11) **EP 1 686 838 A1**
(43) Date of publication of application: **02.08.2006**
(21) Application number: 04799451.2
(22) Date of filing: 02.11.2004
(51) Int. Cl.: H05B 41/24

(54) **HIGH VOLTAGE DISCHARGE LAMP LIGHTING APPARATUS**

(30) Priority: 06.11.2003 JP 2003377346
(71) Applicant: Sumida Corporation, Tokyo 103-8589 (JP)
(72) Inventor: KANNO, Tomoyuki, c/o SUMIDA ELECTRIC CO. LTD., Tokyo 1038589 (JP)
(74) Representative: Prechtel, Jörg
(86) International application number: PCT/JP2004/016245
(87) International publication number: WO 2005/046294

(57) **Abstract**

A high voltage discharge lamp lighting apparatus, wherein a high voltage required to light a high voltage discharge lamp can be obtained with the size of the whole apparatus reduced. A rectification circuit (6), which is disposed on the secondary side of a transformer having a primary winding (3), a secondary winding (4) and a core (5) to receive a secondary side voltage, has a forward function and a flyback function. A voltage-doubler circuit (7) adds an output voltage generated by the rectification circuit (6) to the secondary side voltage. Inclusion of the rectification circuit (6) and voltage-doubler circuit (7) can efficiently boost the secondary voltage. Additionally, an inverter circuit (8) and a booster circuit (9) are disposed in a stage following the voltage-doubler circuit (7).

## Description

### TECHNICAL FIELD

The present invention relates to a high voltage discharge lamp lighting apparatus for causing a high voltage discharge lamp to light.

### BACKGROUND ART

In high voltage discharge lamp lighting apparatuses for use in a high voltage discharge lamp, a predetermined high voltage must be generated to cause the discharge lamp to light.

As means for generating a predetermined high voltage, there has hitherto been known a method for arranging two windings on the secondary side of a transformer and combining the outputs of these secondary-side windings to obtain a double voltage.

Also, a method is possible which combines with a voltage-doubler circuit a transformer (for example, refer to Patent Document 1) having a flyback function or a transformer (for example, refer to Patent Document 2) having a forward function and thereby causes a predetermined high voltage to be generated.

Furthermore, there has been developed a technique of employing a rectification circuit having a flyback function and a forward function, and thereby attempting to downsize the entire apparatus (for example, refer to Patent Document 3).

Patent Document 1: Japanese Unexamined Patent Publication No. 2003-209971
Patent Document 2: Japanese Unexamined Patent Publication No. 2002-142455
Patent Document 3: Japanese Unexamined Patent Publication No. 2003-133095

### DISCLOSURE OF THE INVENTION

### PROBLEMS TO BE SOLVED BY THE INVENTION

It is known that a transformer is one of the major components constituting a high voltage discharge lamp lighting apparatus and the entire apparatus can be made small by making the transformer small.

Also, in recent years, in a vehicle headlight and the like, to achieve a high luminance by a small electric power, a high voltage discharge lamp is mostly used, and further downsizing of the high voltage discharge lamp lighting apparatus is desired.

However, when two secondary -side windings are arranged to obtain a predetermined high voltage, the transformer will grow in size, so the request for downsizing the entire apparatus cannot be responded to.

Also, in a transformer having a flyback function, a switching element is turned on to cause primary current to flow through the primary-side winding and accumulate magnetic energy in the core, and thereafter the switching element is turned off to cause secondary current to be generated in the secondary-side winding by the magnetic energy accumulated in the core. Consequently, the core grows in size, thus making it difficult to downsize the entire apparatus.

The present inventor has attempted to combine a voltage-doubler circuit with such a transformer having a flyback function and thereby downsize the core. However, as shown in the experiment results described below, secondary side voltage can be boosted only by approximately 1.5 times. Consequently, downsizing of the core is limited, so the request for downsizing the entire apparatus cannot be responded to.

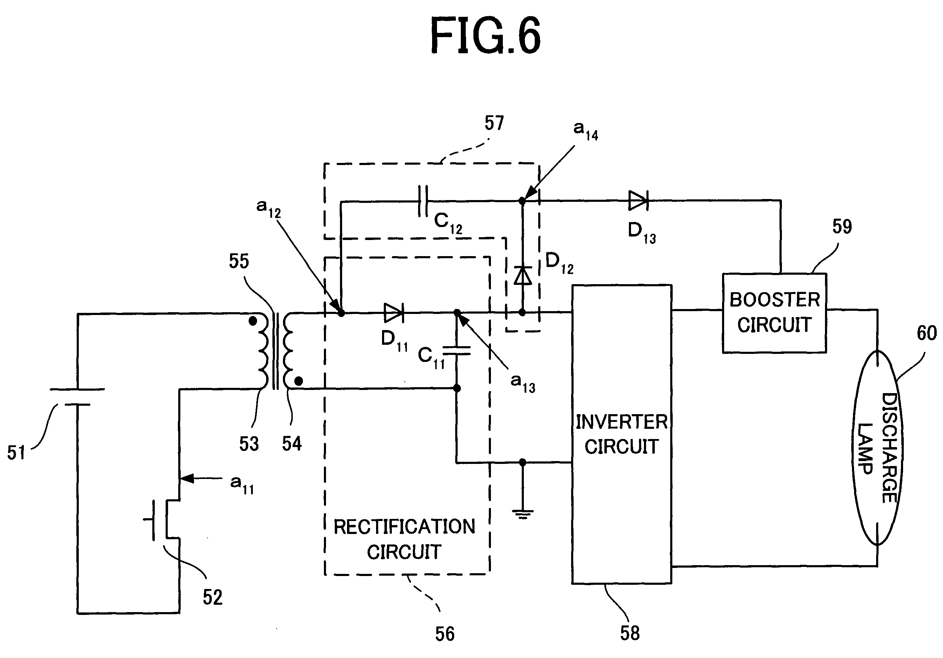

With reference to Figures 6 to 10, there will be described the experiment results of a boosting operation in the high voltage discharge lamp lighting apparatus constituted by combining a voltage-doubler circuit with a conventional transformer having only a flyback function.

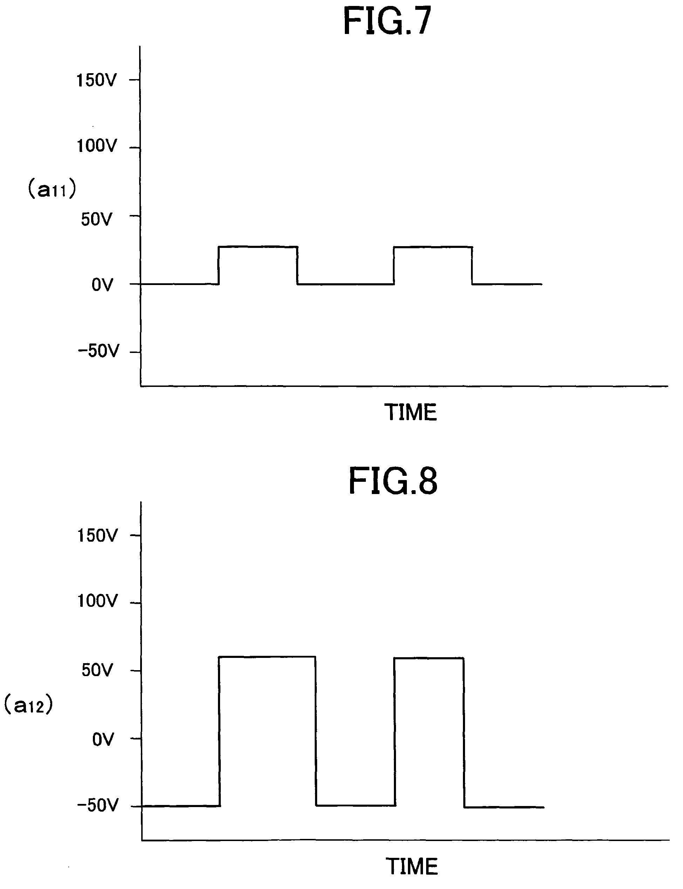

Figure 6 is a block diagram showing a schematic configuration of a discharge lamp lighting apparatus constituted by combining a voltage-doubler circuit with a transformer having only a flyback function. Figures 7 to 10 are timing charts showing a boosting operation in the high voltage discharge lamp lighting apparatus.

As shown in Figure 6, the discharge lamp lighting apparatus constituted by combining a voltage-doubler circuit with a transformer having only a flyback function includes as a primary side circuit, a power source circuit 51 and a switching circuit 52, and as a secondary side circuit, a rectification circuit 56 having a flyback function, and a voltage-doubler circuit 57.

Connected to a primary-side winding 53 is the power source circuit 51 via the switching circuit 52. Also, connected to the secondary-side winding 54 are the rectification circuit 56 having a flyback function, composed of a diode D₁₁ and capacitor C₁₁, and the voltage-doubler circuit 57 composed of a diode D₁₂ and capacitor C₁₂.

Furthermore, connected to the rear stage of the rectification circuit 56 having a flyback function is an inverter circuit 58 receiving a both ends voltage of the capacitor C₁₁. Connected to the inverter circuit 58 is a discharge lamp 60 via a booster circuit 59. Also, connected to the booster circuit 59 is the voltage-doubler circuit 57 via a diode D₁₃.

In the high voltage discharge lamp lighting apparatus, when the switching circuit 52 is turned on, current flows through the primary-side winding 53 and magnetic energy is accumulated in a core 55 by the flyback function; when the switching circuit 52 is turned off, secondary voltage is generated in the secondary-side winding 54.
At this time, when observed at a measurement point a₁₁, the primary voltage has a rectangular waveform of approximately 0 to 28 V as shown in Figure 7.

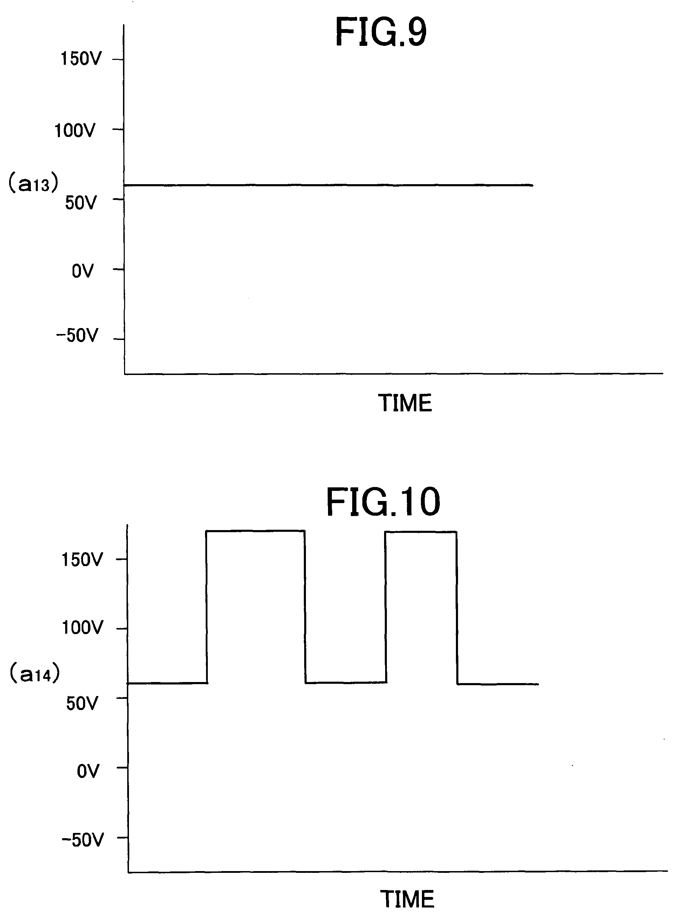

Also, the secondary voltage has a rectangular waveform of approximately - 50 to 60 V as shown in Figure 8 when observed between the measurement point a₁₂ and the ground, and is rectified by the rectification circuit 56 and has a constant value of approximately 60 V as shown in Figure 9 when observed at an output terminal a₁₃ of the rectification circuit 56.

In addition to the voltage rectified by the rectification circuit 56, applied to the capacitor C₁₂ constituting the voltage-doubler circuit 57 is the secondary voltage (the voltage of a rectangular waveform observed at the measurement point a₁₂) via the diode D₁₂. At this time, generated between a measurement point a₁₄ and the ground is a rectangular waveform voltage of approximately 60 to 168 V as shown in Figure 10.

The rectangular waveform voltage observed at the measurement point a₁₄ is applied to the booster circuit 59 via the diode D₁₃, and boosted to a lighting start voltage of the discharge lamp 60 by the booster circuit 59.

In this manner, in the high voltage discharge lamp lighting apparatus constituted by combining the voltage-doubler circuit 57 with the transformer having only a flyback function, the secondary voltage can only be boosted to approximately 168 V at the front stage of the booster circuit 59. More specifically, in this discharge lamp lighting apparatus, the secondary voltage can only be boosted by approximately 1.5 times at the front stage of the booster circuit 59. Thus, to obtain the lighting start voltage of the high voltage discharge lamp, a circuit or the like for performing boosting is further needed.

Also, in the transformer having only a forward function, when the switching element is turned on and primary current flows through the primary-side winding, then secondary current is generated in the secondary-side winding. Accordingly, even when a voltage-doubler circuit is incorporated to generate a predetermined high voltage, there are limits to reduction of the number of turns in the secondary-side winding, so the request for downsizing the entire apparatus cannot be responded to.

Also, as with the technique disclosed in Patent Document 3, in the transformer employing a rectification circuit having a flyback function and a forward function, in addition to the primary-side winding connected to the power source and the secondary-side winding connected to the inverter circuit, supplying electric power to the discharge lamp via the inverter circuit, there is further needed a tertiary-side winding for supplying electric power to the discharge lamp via a booster circuit (an igniter), thus making it difficult to downsize the transformer.

It is generally known that, in the technique disclosed in Patent Document 3 and the like, there is needed a tertiary-side winding for supplying electric power to the discharge lamp via a booster circuit. For example, in "Development of Discharge Headlamp Ballast" described in DENSO Technical Review Vol. 3 No. 1,1998, pp. 65 to 72, this fact is shown in Figure 10 etc.

More specifically, in addition to the primary-side winding and the secondary-side winding, the transformer having a configuration disclosed in Patent Document 3 further requires a tertiary-side winding. Accordingly, 4 T (turns; the abbreviation is used below) of the primary-side winding (φ0.40 × 2 pieces), 18 T of the secondary-side winding (φ0.40) and further, 40 T of the tertiary-side winding (φ0.18) are needed, for example, thus causing a problem in that the transformer grows in size.

In this manner, according to the transformer having a configuration disclosed in Patent Document 3, the entire apparatus can be downsized to a certain degree. However, particularly, in the case of a high voltage discharge lamp lighting apparatus used in a vehicle or the like, further miniaturization is desired.

In view of the above circumstances, the present invention has been proposed, and has an object to provide a high voltage discharge lamp lighting apparatus capable of obtaining a high voltage required to light a high voltage discharge lamp while downsizing the entire apparatus.

### MEANS FOR SOLVING THE PROBLEMS

A high voltage discharge lamp lighting apparatus according to the present invention capable of achieving such object is including: a rectification circuit having a forward function and a flyback function, disposed on a secondary side of a transformer and receiving a secondary side voltage; and a voltage-doubler circuit adding to the secondary side voltage an output voltage generated by the rectification circuit having the forward function and the flyback function.

It is noted that a circuit having a forward function is a circuit determining its output voltage based on a power source voltage and a turn ratio between a primary-side winding and a secondary-side winding, and a circuit having a flyback function is a circuit determining its output voltage based on an inductance and a current of a primary-side winding.

Also, in the high voltage discharge lamp lighting apparatus according to the present invention an inverter circuit and a booster circuit are connected to a rear stage of the voltage-doubler circuit.

### EFFECT OF THE INVENTION

According to the high voltage discharge lamp lighting apparatus of the present invention, a voltage-doubler circuit is further added to a rectification circuit having a forward function and a flyback function, whereby a predetermined high voltage required to light a high voltage discharge lamp can be generated.

Also, in comparison with a high voltage discharge lamp lighting apparatus constituted by combining a circuit having a forward function and a voltage-doubler circuit, the number of turns of the secondary-side winding can be reduced; in comparison with a high voltage discharge lamp lighting apparatus constituted by combining a circuit having only a flyback function and a voltage-doubler circuit, the core can be downsized. Accordingly, the entire apparatus can be downsized, and thus the apparatus can appropriately be used particularly in a high voltage discharge lamp used in a vehicle or the like.

### BEST MODE FOR CARRYING OUT THE INVENTION

A high voltage discharge lamp lighting apparatus according to an embodiment of the present invention will be described below in detail with reference to the accompanying drawings.

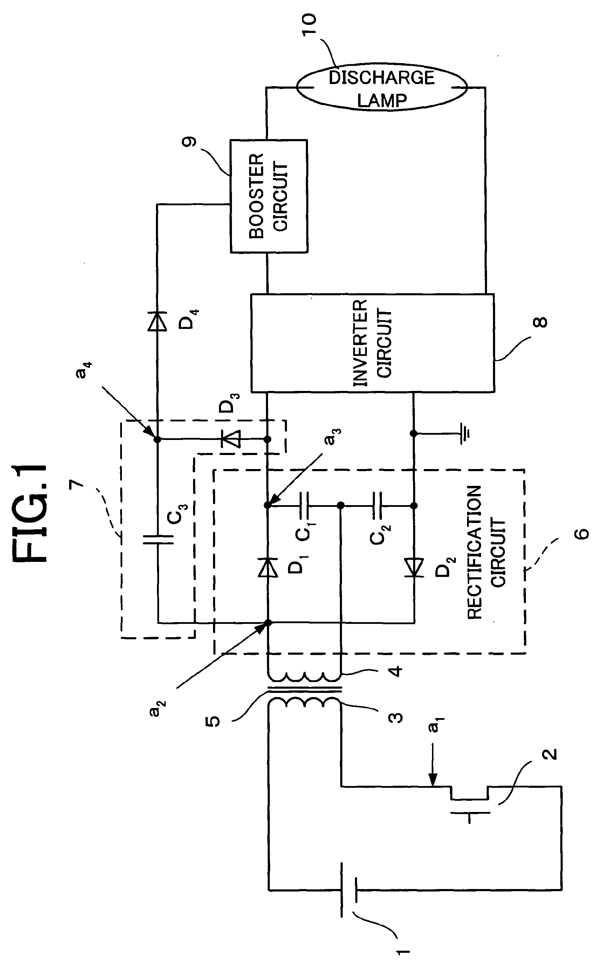

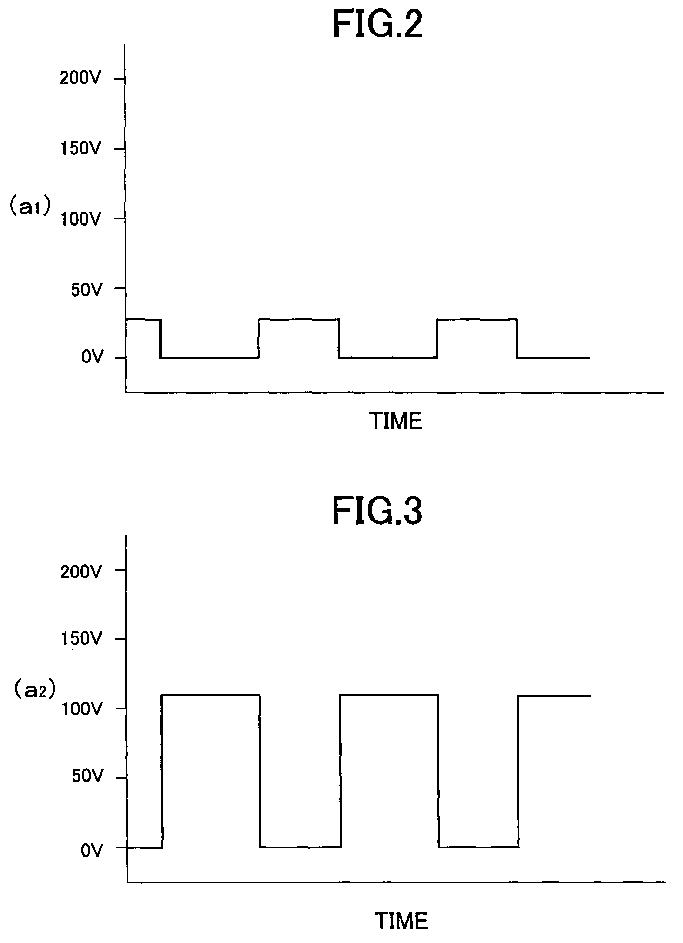

Figure 1 is a block diagram showing a schematic configuration of a high voltage discharge lamp lighting apparatus according to the embodiment of the present invention. Figures 2 to 5 are timing charts showing a boosting operation in the high voltage discharge lamp lighting apparatus.

As shown in Figure 1, the high voltage discharge lamp lighting apparatus according to the embodiment of the present invention includes as its primary-side circuit, a power source circuit 1 and a switching circuit 2, and as its secondary-side circuit, a rectification circuit 6 having a forward function and a flyback function, and a voltage-doubler circuit 7.

Connected to a primary-side winding 3 is the power source circuit 1 via the switching circuit 2.
Also, connected to a secondary-side winding 4 is the rectification circuit 6 having a forward function and a flyback function, constituted of a diode D₁, a diode D₂, a capacitor C₁ and a capacitor C₂, and the voltage-doubler circuit 7 constituted of a diode D₃ and a capacitor C₃.

Furthermore, connected to the rear stage of the rectification circuit 6 having a forward function and a flyback function is an inverter circuit 8 receiving a both ends voltage of the capacitors C₁ and C₂, and connected to the inverter circuit 8 is a discharge lamp 10 via a booster circuit 9. Also, connected to the booster circuit 9 is the voltage-doubler circuit 7 via a diode D₄.

It is noted that, though not shown in detail in Figure 1, the booster circuit 9 includes a charging capacitor, an igniter and a spark gap.

In the high voltage discharge lamp lighting apparatus according to the present embodiment, charges accumulated in the capacitor C₃ are supplied to the discharge lamp 10 via the inverter circuit 8 and the booster circuit 9. In this case, when the discharge start voltage is exceeded in the booster circuit 9, then a lighting voltage is supplied to the discharge lamp 10, and dielectric breakdown occurs within the arc tube of the discharge lamp 10, thus lighting the discharge lamp.

Also, in the high voltage discharge lamp lighting apparatus according to the present embodiment, it is sufficient to arrange, for example, 4 T of the primary-side winding (φ0.40 × 2 pieces) and 18 T of the secondary-side winding (φ0.40). Hence, as with a conventional transformer employing a rectification circuit having a flyback function and a forward function, a tertiary-side winding for supplying electric power to the discharge lamp via a booster circuit (an igniter) is not needed.

The operation of the high voltage discharge lamp lighting apparatus according to the embodiment of the present invention will now be described with reference to Figures 2 to 5.

When the switching circuit 2 is turned on, current flows through the primary-side winding 3 and then, in a portion in charge of the forward function, secondary voltage is generated by the secondary-side winding 4. Simultaneously, in a portion in charge of the flyback function, magnetic energy is accumulated in the core 5, and when the switching circuit 2 is turned off, secondary voltage is generated by the secondary-side winding 4.

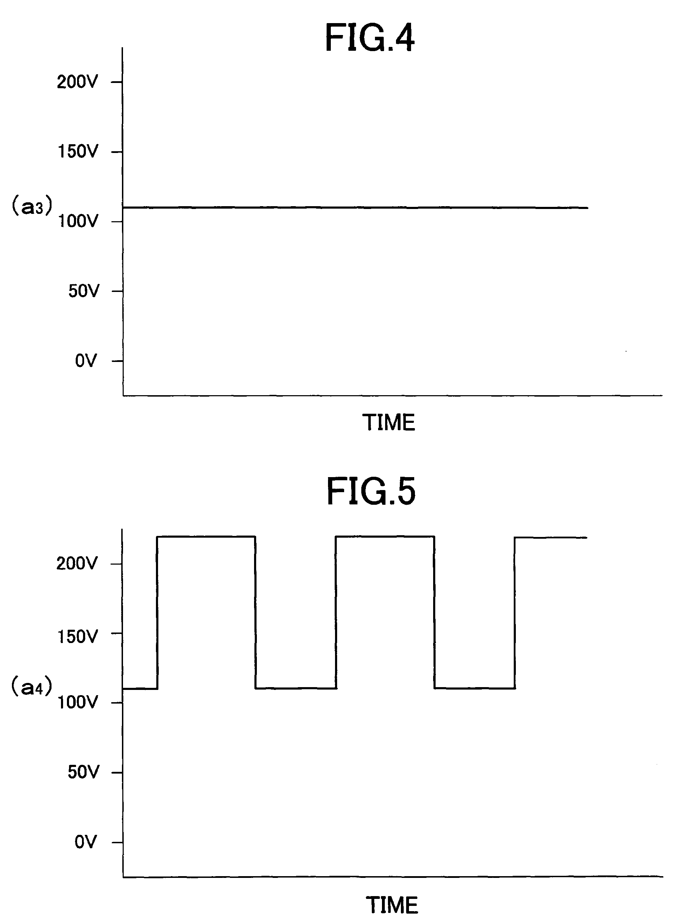

At this time, when observed at a measurement point a₁, the primary voltage has a rectangular waveform of approximately 0 to 28 V as shown in Figure 2.
Also, the secondary voltage has a rectangular waveform of approximately 0 to 108 V as shown in Figure 3 when observed between the measurement point a₂ and the ground, and is rectified by the rectification circuit 6 and has a constant value of approximately 108 V as shown in Figure 4 when observed at an output terminal a₃ of the rectification circuit 6.

Furthermore, in addition to the voltage rectified by the rectification circuit 6, applied to the capacitor C₃ constituting the voltage-doubler circuit 7 is the secondary voltage (the voltage of a rectangular waveform observed at the measurement point a₂) via the diode D₃. At this time, generated between a measurement point a₄ and the ground is a rectangular waveform voltage of approximately 110 to 220 V as shown in Figure 5.

The rectangular waveform voltage observed at the measurement point a₄ is applied to the booster circuit 9 via the diode D₄, and boosted to a lighting start voltage of the discharge lamp 10 by the booster circuit 9.

In this manner, in the high voltage discharge lamp lighting apparatus constituted by combining the voltage-doubler circuit 7 with the rectification circuit 6 having a forward function and a flyback function, the secondary voltage can be boosted to approximately 220 V at the front stage of the booster circuit 9. More specifically, in this discharge lamp lighting apparatus, the secondary voltage can be boosted by approximately 2 times at the front stage of the booster circuit 9. Thus the circuit configuration is simple, and at the same time the core and the secondary side-winding can be downsized.

Furthermore, a tertiary-side winding for supplying electric power to the discharge lamp via a booster circuit (an igniter) is not needed, so the transformer itself can be constructed with a small size. Accordingly, a highly efficient high voltage discharge lamp lighting apparatus with the entire apparatus downsized can be provided.

It is noted that the electrical characteristics of each diode and capacitor constituting the high voltage discharge lamp lighting apparatus according to the present invention are to be appropriately varied and implemented according to the rating of a connected discharge lamp.

### BRIEF DESCRIPTION OF THE DRAWINGS

Figure 1 is a block diagram showing a schematic configuration of a high voltage discharge lamp lighting apparatus according to an embodiment of the present invention;
Figure 2 is a timing chart showing a boosting operation in the high voltage discharge lamp lighting apparatus according to the embodiment of the present invention (measurement point a₁);
Figure 3 is a timing chart showing the boosting operation in the high voltage discharge lamp lighting apparatus according to the embodiment of the present invention (measurement point a₂);
Figure 4 is a timing chart showing the boosting operation in the high voltage discharge lamp lighting apparatus according to the embodiment of the present invention (measurement point a₃);
Figure 5 is a timing chart showing the boosting operation in the high voltage discharge lamp lighting apparatus according to the embodiment of the present invention (measurement point a₄);
Figure 6 is a block diagram showing a schematic configuration of a discharge lamp lighting apparatus constituted by combining a voltage-doubler circuit with a conventional transformer having only a flyback function;
Figure 7 is a timing chart showing a boosting operation in the conventional high voltage discharge lamp lighting apparatus (measurement point a₁₁);
Figure 8 is a timing chart showing the boosting operation in the conventional high voltage discharge lamp lighting apparatus (measurement point a₁₂);
Figure 9 is a timing chart showing the boosting operation in the conventional high voltage discharge lamp lighting apparatus (measurement point a₁₃); and
Figure 10 is a timing chart showing the boosting operation in the conventional high voltage discharge lamp lighting apparatus (measurement point a₁₄).

### DESCRIPTION OF SYMBOLS

- 1, 51: Power source circuit
- 2, 52: Switching circuit
- 3, 53: Primary-side winding
- 4,54: Secondary-side winding
- 5, 55: Core
- 6: Rectification circuit having a forward function and a flyback function
- 7,57: Voltage-doubler circuit
- 8, 58: Inverter circuit
- 9, 59: Booster circuit
- 10, 60: Discharge lamp
- 56: Rectification circuit having a flyback function
- D₁ to D₄, D₁₁ to D₁₃: Diode
- C₁ to C₃, C₁₁, C₁₂: Capacitor

## Claims

1. A high voltage discharge lamp lighting apparatus comprising:
a rectification circuit having a forward function and a flyback function, disposed on a secondary side of a transformer and receiving a secondary side voltage; and
a voltage-doubler circuit adding to the secondary side voltage an output voltage generated by the rectification circuit having the forward function and the flyback function.

2. The high voltage discharge lamp lighting apparatus according to claim 1, wherein an inverter circuit and a booster circuit are connected to a rear stage of the voltage-doubler circuit.
